# EUROPÄISCHE PATENTSCHRIFT

(11) **EP 0 466 721 B1**
(45) Veröffentlichungstag und Bekanntmachung des Hinweises auf die Patenterteilung: **23.02.1994**
(21) Anmeldenummer: 90904820.9
(22) Anmeldetag: 24.03.1990
(51) Int. Cl.: B01D 19/00, C02F 1/20, E21B 43/08

(54) **ANORDNUNG ZUM AUSTREIBEN LEICHTFLÜCHTIGER VERUNREINIGUNGEN AUS DEM GRUNDWASSER**
DEVICE FOR REMOVING HIGHLY VOLATILE IMPURITIES FROM THE GROUND WATER
DISPOSITIF POUR EXPULSER DES IMPURETES VOLATILES DE LA NAPPE SOUTERRAINE

(30) Priorität: 05.04.1989 DE 3910990
(43) Veröffentlichungstag der Anmeldung: 22.01.1992
(73) Patentinhaber: IEG Industrie-Engineering GmbH, D-72770 Reutlingen (DE)
(72) Erfinder: BERNHARDT, Bruno, D-7410 Reutlingen (DE)
(74) Vertreter: Möbus, Rudolf, Dipl.-Ing.
(86) Internationale Anmeldenummer: EP9000479
(87) Internationale Veröffentlichungsnummer: WO9011811

(56) Entgegenhaltungen:
- DE-A- 3 811 962
- FR-A- 1 167 397
- GB-A- 782 823
- US-A- 4 045 336

## Beschreibung

Die Erfindung betrifft eine Anordnung zum Austreiben leichtflüchtiger Verunreinigungen aus dem Grundwasser und dem von ihm durchströmten Erdreich mit den im Oberbegriff des Hauptanspruches aufgeführten Merkmalen. Eine solche Anordnung ist bereits aus der DE-PS 38 11 962 bekannt. Mit ihr läßt sich eine Grundwasser-Vertikalströmung im Brunnenschacht begünstigen.

Der Erfindung liegt die Aufgabe zugrunde, eine solche Anordnung so auszubilden, daß die Grundwasser-Vertikalströmung noch stärker begünstigt und auch steuerbar wird.

Die gestellte Aufgabe wird mit einer Anordnung der genannten Art erfindungsgemäß mit den Merkmalen des kennzeichnenden Teiles des Hauptanspruches gelöst.

Normalerweise ist man bestrebt, verunreinigtes Grundwasser nach oben in diejenige Richtung zu holen, in welche die Verunreinigungen abgezogen werden sollen, nämlich aus dem Boden heraus. Es hat sich aber gezeigt, daß die Reinigungswirkung der Anordnung so gut ist, daß man es wagen kann, das Grundwasser durch den Reinigungsbereich hindurch nach unten zu fördern und in tieferen Bodenschichten wieder austreten zu lassen, ohne daß sich das bestandene Vorurteil bestätigt, daß dadurch die Gefahr einer Verbreiterung einer bereits vorhandenen Verunreinigung auftritt. Mit dieser Maßnahme läßt sich in vielen Einsatzfällen der Reinigungseffekt erhöhen und beschleunigen.

Durch die in dem unterhalb des Düsenkörpers im Grundwasserbereich angeordneten Rohr befindliche angetriebene Förderschraube läßt sich unterhalb des Düsenkörpers und damit auch unterhalb des Reinigungsbereiches des Brunnenschachtes eine Flüssigkeitsbewegung im Brunnenschacht erzeugen, mit welcher - je nach Drehrichtung der Förderschraube - Grundwasser entweder aus dem Reinigungsbereich nach unten oder aber von unten nach oben in den Reinigungsbereich gefördert wird, was dann jeweils zwangsläufig eine Gegenbewegung von Grundwasser entweder zurück nach oben oder vom oberen Reinigungsbereich zurück nach unten auslöst und im Reinigungsbereich den Austausch von gereinigtem Grundwasser und kontaminiertem Grundwasser beschleunigt. Besonders vorteilhaft hat sich diese Anordnung in Fällen erwiesen, wo Verunreinigungen in tiefer gelegenen und von Grundwasser durchströmten Bodenschichten konzentriert sind und Sorge getragen werden muß, daß beim Einbringen eines Brunnenschachtes nicht eine nachträgliche zusätzliche Verunreinigung höher gelegener Bodenschichten erfolgt. In diesem Fall kann in den Brunnenschacht ein Zwischenboden oberhalb der stärker verunreinigten Bodenschichten eingesetzt werden, durch welchen der mit der Förderschraube versehene Fortsetzungsteil des Rohres hindurchgeführt ist und erlaubt, kontaminiertes Grundwasser von unterhalb des Zwischenbodens in zweckmäßiger Dosierung nach oben in den oberhalb des Düsenkörpers befindlichen Reinigungsbereich des Brunnenschachtes zu fördern.

Bei der Anordnung gemäß der Erfindung kann ein durchgehendes Rohr Verwendung finden, das bis zum Düsenkörper zur Luftführung und unterhalb davon zur Wasserführung dient und das entsprechende Öffnungen für den Luftdurchtritt und für den Wasserdurchtritt aufweist. Das Rohr kann aber auch in seinen luftführenden oberen Teil und in seinen wasserführenden und mit der Förderschraube versehenen Fortsetzungsteil getrennt sein, wobei die getrennten Teile auch unterschiedlichen Durchmesser aufweisen können. Vorteilhafterweise kann dabei in beiden Fällen die Förderschraube auf einer konzentrisch im Rohr geführten und mit einem auf das obere Rohrende aufgesetzten Motor verbundenen Welle angeordnet sein.

Um bei der verstärkten Wasserströmung im Brunnenschacht die durch die Unterdruckbildung erreichte günstige Reinigungswirkung nicht durch Turbulenzen zu gefährden, kann oberhalb des Düsenkörpers mit Abstand von ihm und konzentrisch und mit Abstand vom Rohr ein Leitring am Rohr befestigt sein, der im Reinigungsbereich ein Hochsteigen des Grundwassers im inneren und luftdurchsetzten Schachtbereich und ein Rückströmen des Grundwassers im äußeren, schachtwandungsnahen Bereich begünstigt. Zusätzlich kann auch konzentrisch und mit Abstand zum Düsenkörper ein zusätzlicher Leitring angeordnet sein, welcher die Grundwasserströmung im Bereich des Düsenkörpers beeinflußt. Dieser zusätzliche Leitring kann unten durch einen mit Abstand vom Düsenkörper verlaufenden Boden mit dem wasserführenden Fortsetzungsteil des Rohres verbunden sein und dadurch einen Auffangnapf für das mittels der Förderschraube nach unten abzuführende gereinigte Grundwasser bilden.

Der Fortsetzungsteil des Rohres kann gleichzeitig als Führung für einen bereits erwähnten Zwischenboden des Brunnenschachtes dienen, wobei als Befestigungsorgan zum Verankern des Zwischenbodens an der Brunnenschachtwandung vorteilhafterweise an der äußeren Topfwandung des zweckmäßig topfartig ausgebildeten Zwischenboden-Einsatzes mindestens ein aufblasbarer Klemmschlauch befestigt sein kann. Der Düsenkörper kann zusätzlich mit aus der DE-PS 38 11 962 bekannten Düsenschächten durchsetzt sein, die im Bereich der Luftkammer mit Lufteintrittsöffnungen in ihrer Wandung versehen sind und eine zusätzliche Sogwirkung auf das Grundwasser im Bereich des Düsenkörpers ausüben.

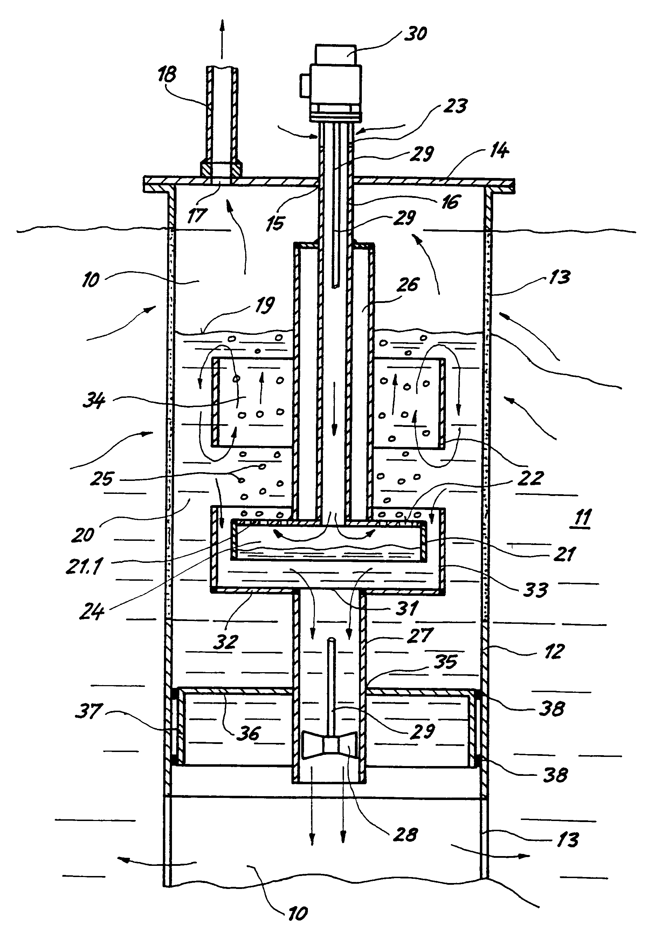

Nachfolgend wird ein Ausführungsbeispiel einer erfindungsgemäß ausgebildeten Anordnung anhand der beiliegenden Zeichnung näher erläutert, die einen schematischen Längsschnitt durch einen mit der Anordnung versehenen Brunnenschacht darstellt.

Ein in Grundwasser führendes und beispielsweise durch Chlorkohlenwasserstoffe verseuchtes Erdreich 11 eingebrachter Brunnenschacht 10 ist teils mittels geschlossener Rohrabschnitte 12 und teils mittels wasserdurchlässiger Siebrohrabschnitte 13 ausgekleidet. Das obere Ende des Brunnenschachtes 10 ist durch einen Deckel 14 verschlossen. Im Deckel 14 ist eine zentrale Öffnung 15 für den freien Durchgang eines zentralen Rohres 16 und eine außermittige Öffnung 17 für ein Absaugrohr ausgebildet. Das

Absaugrohr 18 führt zu einem nicht dargestellten Ventilator, mit welchem im Brunnenschacht oberhalb des sich dort ausbildenden Grundwasserspiegels 19 ein Unterdruck erzeugt wird.

Die in den Brunnenschacht 10 eingebrachte Anordnung zum Austreiben leichtflüchtiger Verunreinigungen aus dem sich im Brunnenschacht sammelnden Grundwasser 20 besteht in erster Linie aus einem Düsenkörper 21, dessen obere Begrenzungswandung 21.1 mit Düsenöffnungen 22 versehen ist. Der Düsenkörper 21 ist am unteren Ende des zentralen Rohres 16 befestigt, durch welches Luft durch obere äußere Öffnungen 23 bis in den Innenraum 24 des Düsenkörpers einströmen kann, die dann unter der Wirkung des oberhalb des Grundwasserspiegels 19 erzeugten Unterdruckes 10 durch die Düsenöffnungen 22 hindurch in Form feiner Bläschen 25 durch das Grundwasser 20 nach oben steigt. Um das zentrale Rohr 16 herum ist ein ringförmiger Schwimmkörper 26 ausgebildet, der den Düsenkörper 21 schwimmend in einem gewünschten Abstand vom Flüssigkeitsspiegel 19 hält.

Das zentrale Rohr 16 findet unterhalb des Düsenkörpers 21 eine Fortsetzung in einem ganz im Grundwasserbereich befindlichen zentralen Rohrabschnitt 27. In diesem Rohrabschnitt ist eine Förderschraube 28 angeordnet. Die Förderschraube 28 ist auf einer Welle 29 befestigt, die durch den Rohrabschnitt 27, den Düsenkörper 21 und das Rohr 16 hindurchgeführt und von einem Antriebsmotor 30 angetrieben ist, der auf das obere äußere Ende des Rohres 16 aufgesetzt ist.

Das Rohr 16 und der Rohrabschnitt 27 können auch einstückig aus einem durchgehenden Rohr bestehen, das im Bereich des Düsenkörpers 21 Luftaustrittsöffnungen und unterhalb davon Grundwasser-Durchtrittsöffnungen aufweisen müßte. Beim dargestellten Ausführungsbeispiel ist der untere Rohrabschnitt in einer zentralen Wasserdurchtrittsöffnung 31 einer Bodenwandung 32 eines Leitringes 33 befestigt, der mit Abstand konzentrisch zum Düsenkörper 21 verläuft und über nicht dargestellte Haltestege am Düsenkörper 21 befestigt ist. Oberhalb des Düsenkörpers 21 ist außerdem ein Leitring 34 konzentrisch zum Rohr 26 angeordnet und über einzelne und nicht dargestellte Distanzstege am Schwimmkörper 26 befestigt.

Der Rohrabschnitt 27 ist durch eine zentrale Öffnung 35 eines in den Brunnenschacht 10 eingebrachten Zwischenbodens 36 frei beweglich hindurchgeführt. Der Zwischenboden 36 ist topfartig gestaltet. Seine parallel zu den Schachtwandungen verlaufende Topfwandung 37 ist außen mit zwei aufblasbaren Klemmschläuchen 38 versehen, die über nicht dargestellte Schlauchleitungen zur Befestigung des Zwischenbodens 36 an der Brunnenschachtwandung aufblasbar sind.

Strömungspfeile zeigen in der Anordnung und im Brunnenschacht das durch die Unterdruckbildung bewirkte Hindurchströmen von Luft sowie das durch die Unterdruckbildung im Brunnenschacht erzielte Strömen des Grundwassers durch die Siebwandungsteile 13 des Brunnenschachtes hindurch und innerhalb des Brunnenschachtes an, wo durch die Förderschraube 28 eine Vertikalströmung des Grundwassers verstärkt wird. In der Zeichnung ist ein Absaugen von Grundwasser aus dem oberhalb des Siebkörpers 21 befindlichen Reinigungsbereich durch den Rohrabschnitt 27 nach unten angedeutet. Durch eine Drehrichtungsumkehr der Förderschraube 28 kann aber auch ein Hochfördern von Grundwasser von unterhalb des Zwischenbodens 36 nach oben in den Reinigungsbereich der Anordnung bewirkt werden. Im Düsenkörper können zusätzlich außermittig zusätzliche Düsenschächte angeordnet werden, wie sie in der DE-PS 38 11 962 dargestellt und beschrieben sind.

## Patentansprüche

1. Anordnung zum Austreiben leichtflüchtiger Verunreinigungen aus dem Grundwasser und dem von ihm durchströmten Erdreich durch Erzeugen von Unterdruck in einem bis in den Bereich des verunreinigten Grundwassers getriebenen Brunnenschacht (10) und durch Zuleitung eines Gases, insbesondere Frischluft, unterhalb des Wasserspiegels (19) in den Brunnenschacht, mit einem unterhalb des Wasserspiegels (19) angeordneten, eine Luftkammer (24) begrenzenden und durch einen Schwimmkörper (26) gehaltenen Düsenkörper (21) zur Verteilung des zugeleiteten Gases auf den Brunnenschachtquerschnitt über eine mit Düsenöffnungen (22) versehene obere Begrenzungswandung des Düsenkörpers (21), und mit einem zur Luftzuleitung zentral zum Düsenkörper geführten Rohr (16), das mit dem Düsenkörper (21) fest verbunden ist und das im Bereich der Luftkammer (24) des Düsenkörpers (21) mindestens eine Luftaustrittsöffnung aufweist, und mit einem ganz im Grundwasserbereich befindlichen, in Schachtlängsrichtung verlaufenden Rohr zur Wasserführung im Schacht, dadurch gekennzeichnet, daß das Wasserführungsrohr als nach unten offener Fortsetzungsrohrbereich (27) zum Luftzuleitungsrohr (16) ausgebildet ist, das nach unten über den Düsenkörper (21) hinausgeführt ist, daß in diesem Fortsetzungsrohr (27) eine Förderschraube (28) angeordnet ist, die in beiden Förderrichtungen betätigbar ist und daß das Fortsetzungsrohr (27) in dem Bereich zwischem dem Düsenkörper (21) und der Förderschraube (28) mit mindestens einer im Grundwasserbereich liegenden zusätzlichen Wasserdurchtrittsöffnung (31) versehen ist.

2. Anordnung nach Anspruch 1, dadurch gekennzeichnet, daß die Förderschraube (28) auf einer konzentrisch im Rohr (16, 27) geführten und mit einem auf das obere Rohrende aufgesetzten Motor (30) verbundenen Welle (29) angeordnet ist.

3. Anordnung nach Anspruch 1 oder 2, dadurch gekennzeichnet, daß das Fortsetzungsrohr (27) durch einen im Brunnenschacht (10) angeordneten Zwischenboden (36) hindurchgeführt ist.

4. Anordnung nach Anspruch 3, dadurch gekennzeichnet, daß der Zwischenboden (36) durch einen topfartigen Einsatz gebildet ist, der äußere Befestigungsorgane (38) und eine Öffnung (35) zum verschiebbaren Hindurchführen des Fortsetzungsrohres (27) aufweist.

5. Anordnung nach Anspruch 4, dadurch gekennzeichnet, daß als Befestigungsorgane an der äußeren Topfwandung (37) des Zwischenbodens (36) mindestens ein aufblasbarer Klemmschlauch (38) befestigt ist.

6. Anordnung nach einem der Ansprüche 1 bis 5, dadurch gekennzeichnet, daß konzentrisch und mit Abstand zum Düsenkörper (21) zusätzlich zu einem oberhalb des Düsenkörpers (21) mit Abstand von ihm und konzentrisch und mit Abstand vom Rohr (16) angeordneten ortsfesten Leitring (34) ein zweiter Leitring (33) angeordnet ist, der unten durch einen mit Abstand vom Düsenkörper (21) verlaufenden Boden (32) mit dem Fortsetzungsrohr (27) verbunden ist.

7. Anordnung nach einem der Ansprüche 1 bis 6, dadurch gekennzeichnet, daß der Schwimmkörper (26) als konzentrisch zum Rohr (16) und/oder zum Fortsetzungsrohr (27) angeordneter Ringkörper ausgebildet ist.

## Claims

1. Arrangement for the expulsion of volatile impurities from groundwater and the soil it flows through by way of producing a subpressure in a wellshaft (10) which is driven into the area of soiled groundwater and by feeding a gas, in particular fresh air, to below the water level (19) in the wellshaft, comprising a nozzle body (21), which is arranged below the water level (19) and which defines an air chamber (24) and which is supported by a floating body (26), for the distribution of the delivered gas over the wellshaft cross-section via an upper defining wall of the nozzle body (21) with nozzle openings (22), and with a pipe (16) for the supply of air, which is guided centrally to the nozzle body and which is firmly connected to the nozzle body (21) and which has in the area of the air chamber (24) of the nozzle body (21) at least one air-outlet opening, and with a pipe which is located in its entirety in the groundwater area and which extends in the longitudinal direction of the shaft for ducting water in the shaft, **characterised in that** the water-ducting pipe is arranged as a downwardly open extension pipe area (27) to the air-feed pipe (16), which is downwardly guided to the outside via the nozzle body (21), that in said extension pipe (27) is arranged a conveyer propeller (28) which is operated in both conveying directions, and that the extension pipe (27) is provided in the area between the nozzle body (21) and the conveyer propeller (28) with at least one additional water-passage opening (31) which is positioned in the groundwater area.

2. Arrangement according to claim 1, **characterised in that** the conveyer propeller (28) is arranged on a shaft (29), which is concentrically guided in the pipe (16, 27) and connected to a motor (30) which is placed on the top end of the pipe.

3. Arrangement according to claim 1 or 2, **characterised in that** the extension pipe (27) is passed through an intermediate floor (36) arranged in the wellshaft (10).

4. Arrangement according to claim 3, **characterised in that** the intermediate floor (36) is formed by a troughlike insert comprising outer fixing elements (38) and an opening (35) for displaceable passage of the extension pipe (27).

5. Arrangement according to claim 4, **characterised in that** at least one inflatable clamping hose (38) is attached as a fixing element to the outer trough wall (37).

6. Arrangement according to one of claims 1 to 5, **characterised in that**, in addition to a guide ring (34), which is fixedly and concentrically arranged above the nozzle body (21) and at a distance therefrom, is concentrically and at a distance from the nozzle body (21) additionally arranged a second guide ring (33), which is at the bottom connected to the extension pipe (27) by means of a bottom (32) which extends at a distance from the nozzle body (21).

7. Arrangement according to one of claims 1 to 6, **characterised in that** the floating body (26) is an annular element which is arranged concentrically to the pipe (16) and/or to the extension pipe (27).

## Revendications

1. Dispositif pour chasser des polluants volatils des eaux souterraines et de la terre traversée par celles-ci par génération d'une dépression dans un puits (10) entraîné jusque dans la zone des eaux souterraines polluées et par conduite d'un gaz, en particulier d'air frais, au-dessous du niveau d'eau (19) dans le puits, avec un corps à buses (21) disposé au-dessous du niveau d'eau (19), délimitant une chambre d'air (24) et maintenu par un flotteur (26) pour la répartition du gaz conduit sur la section du puits par l'intermédiaire d'une paroi de délimitation supérieure du corps à buses (21) munie d'ouvertures de buses (22) et avec un tube d'alimentation en air (16) conduit centralement par rapport au corps à buses, qui est relié fixe au corps à buses (21) et qui présente dans la zone de la chambre d'air (24) du corps à buses (21) au moins une ouverture de sortie d'air et avec un tube se trouvant entièrement dans la zone des eaux souterraines, placé dans la direction longitudinale du puits pour l'alimentation en eau dans le puits, caractérisé en ce que le tube d'alimentation en eau est formé comme zone de tube de prolongement (27) ouverte vers le bas pour le tube d'alimentation en air (16) qui est conduit à l'extérieur vers le bas par l'intermédiaire du corps à buses (21), en ce qu'une hélice de transport (28) est disposée dans ce tube de prolongement (27), qui peut être actionnée dans les deux directions de transport et en ce que le tube de prolongement (27) est muni dans la zone entre le corps à buses (21) et l'hélice de transport (28) d'au moins une ouverture de passage d'eau supplémentaire (31) située dans la zone des eaux souterraines.

2. Dispositif selon la revendication 1, caractérisé en ce que l'hélice de transport (28) est disposée sur un arbre (29) introduit concentriquement dans le tube (16, 27) et relié à un moteur (30) monté sur l'extrémité supérieure du tube.

3. Dispositif selon la revendication 1 ou 2, caractérisé en ce que le tube de prolongement (27) est introduit à travers un faux-fond (36) disposé dans le puits (10).

4. Dispositif selon la revendication 3, caractérisé en ce que le faux-fond (36) est constitué d'un insert en forme de pot qui présente des organes de fixation extérieurs (38) et une ouverture (35) pour l'introduction à coulissement du tube de prolongement (27).

5. Dispositif selon la revendication 4, caractérisé en ce qu'au moins un tuyau souple de serrage gonflable (38) est fixé sur la paroi extérieure du pot (37) du faux-fond (36) comme organe de fixation.

6. Dispositif selon l'une des revendications 1 à 5, caractérisé en ce qu'en plus d'une bague de guidage (34) disposée fixe au-dessus du corps à buses (21) à distance de celui-ci et concentriquement et à distance du tube (16), une deuxième bague de guidage (33) qui est reliée en bas au tube de prolongement (27) par un fond (32) placé à distance du corps à buses (21) est disposée concentriquement et à distance du corps à buses (21).

7. Dispositif selon l'une des revendications 1 à 6, caractérisé en ce que le flotteur (26) est conçu comme corps annulaire disposé concentriquement au tube (16) et/ou au tube de prolongement (27).
